# DEMANDE DE BREVET EUROPEEN

(11) **EP 0 857 946 A1**
(43) Date de publication de la demande: **12.08.1998**
(21) Numéro de dépôt: 98400217.0
(22) Date de dépôt: 03.02.1998
(51) Int. Cl.: G01C 19/70

(54) **Dispositif de fixation d'un bloc optique de gyromètre laser sur un mécanisme d'activation**

(30) Priorité: 05.02.1997 FR 9701269
(71) Demandeur: SEXTANT AVIONIQUE, 78140 Velizy Villacoublay (FR)
(72) Inventeur: Jaulain, Yves, 94117 Arcueil Cedex (FR); Loil, Eric, 94117 Arcueil Cedex (FR); Cordonnier, Jacques, 94117 Arcueil Cedex (FR); Bonnaudet, Etienne, 94117 Arcueil Cedex (FR)
(74) Mandataire: Beylot, Jacques

(57) **Abrégé**

Le dispositif de fixation du bloc optique (1) sur la couronne d'activation (CA₂) du mécanisme d'activation comprend une couronne de fixation (CF₁) solidaire de la couronne d'activation (CA₂) et portant une pluralité de cales de fixation (CB, CB') collées sur le bloc optique et reliées à la couronne (CF₁) par des languettes axiales flexibles.

L'invention s'applique notamment à un gyromètre laser triaxial.

## Description

La présente invention concerne un dispositif de fixation d'un bloc optique de gyromètre laser sur un mécanisme d'activation.

Elle s'applique aussi bien à des gyromètres monoaxe dans lesquels les cavités optiques s'étendent dans un même plan qu'à des gyromètres triaxe dans lesquels les cavités optiques s'étendent tridimensionnellement.

D'une manière générale, on sait que les blocs optiques utilisés dans les gyromètres laser sont réalisés en des matériaux présentant de très faibles coefficients de dilatation, par exemple en quartz ou en zérodur. En effet, ces blocs optiques comprennent des cavités optiques résonnantes réalisées par des usinages de très haute précision et dont les dimensions doivent rester constantes quelque soit l'environnement dans lequel ils se trouvent (en particulier sur une très large plage de température).

En outre, pour éviter des perturbations des écoulements à l'intérieur des cavités, le bloc optique doit présenter une bonne homogénéité thermique de manière à éviter autant que possible la présence de gradients thermiques importants.

Le mécanisme d'activation qui sert à entraîner le bloc selon un mouvement de rotation alternatif est habituellement réalisé en un métal présentant de bonnes propriétés d'élasticité, mais dont le coefficient de dilatation est non négligeable.

Compte-tenu-de la nature et des propriétés des matériaux utilisés, la fixation du bloc optique sur son mécanisme d'activation pose de nombreux problèmes.

Tout d'abord, la dureté du bloc, sa fragilité (frangibilité) et sa mauvaise usinabilité excluent la plupart des moyens de fixation classiques, étant entendu que ces moyens induisent en général des défauts d'homogénéité mécanique et thermique du bloc, contraires aux objectifs recherchés.

Le collage du bloc directement sur une couronne d'activation ne constitue pas lui non plus une solution satisfaisante en raison des phénomènes de dilatations différentielles entre la couronne et le bloc : ces dilatations différentielles engendrent des contraintes en cisaillement au niveau de la zone de collage, qui provoquent des ruptures de la liaison bloc/couronne d'activation.

En outre, la surface de contact relativement importante entre ces deux pièces, qui est nécessaire pour obtenir une bonne fixation, induit une hétérogénéité thermique à l'intérieur du bloc.

L'invention a donc plus particulièrement pour but un mode de fixation qui résolve tous les problèmes précédemment évoqués.

Elle propose donc à cet effet, un dispositif de fixation faisant intervenir un organe de fixation comprenant des moyens de transmission du couple de rotation engendré par le mécanisme d'activation ainsi que des moyens de compensation des écarts dimensionnels se produisant entre le bloc et la couronne d'activation du mécanisme d'activation.

Selon un premier mode d'exécution de l'invention, le dispositif de fixation pourra faire intervenir une couronne de fixation portant une pluralité de cales de fixation réparties de façon uniforme autour de ladite couronne et reliées à cette dernière par une languette axiale flexible, en forme de secteur cylindrique, lesdites cales de fixation étant destinées à venir se fixer par collage sur au moins une face du bloc optique.

Grâce à cette disposition, la transmission du couple s'effectuera dans de bonnes conditions grâce à la raideur tangentielle des languettes axiales, tandis que les problèmes résultant des dilatations différentielles seront résolues grâce à la flexibilité des languettes et en raison du fait que la surface de contact entre les cales et le bloc est réduite et qu'en conséquence, les variations dimensionnelles des cales restent dans les limites de tolérance du collage.

Cette solution convient d'une façon particulièrement remarquable à la fixation d'un gyromètre triaxe dont le bloc optique présente une forme octaédrique et selon lequel l'axe d'activation passe au centre de deux faces triangulaires parallèles et opposées du bloc, ces faces étant bordées par des arêtes chanfreinées.

Dans ce cas, la couronne de fixation pourra comprendre trois couples de cales biseautées situés à 120° l'un de l'autre et destinés à venir se coller sur les régions centrales des arêtes chanfreinées entourant l'une des susdites faces triangulaires.

Ce mode de fixation présente l'avantage de réduire au minimum les contraintes en cisaillement des zones de collage.

Celles-ci ne sont pratiquement plus sujettes qu'à des efforts de compression ou des efforts de traction auxquels elles peuvent aisément résister.

Selon un autre mode d'exécution de l'invention, le disposition de fixation fait intervenir un perçage traversant réalisé dans le bloc coaxialement à l'axe d'activation, entre deux faces planes parallèles opposées. Dans ce cas, la fixation du bloc sur la couronne d'activation fait intervenir un tirant à tête passant au travers du bloc pour venir se fixer sur ladite couronne, ladite tête prenant appui sur le bloc par l'intermédiaire d'un moyen élastique précontraint de manière à exercer une force d'application entre la couronne et le bloc.

Grâce à cette disposition, on évite tous les problèmes relatifs au collage et donc aux problèmes de dilatation différentielle.

En outre, il devient possible d'utiliser le tirant en tant que conducteur thermique pour obtenir une homogénéisation du bloc en température.

Des modes d'exécution de l'invention seront décrits ci-après, titre d'exemples non limitatifs, avec référence aux dessins annexés dans lesquels :
La figure 1 est une vue en perspective éclatée illustrant le principe du montage à deux roues polaires d'un bloc optique d'un gyromètre laser triaxe sur son mécanisme d'activation ;
Les figures 2, 3 - 4, 5 - 6, 7 représentent en perspective, respectivement vues de dessous et vues de dessus des couronnes de fixation utilisables pour le montage d'un bloc optique du type de la figure 1 sur un mécanisme d'activation ;
La figure 8 est une coupe axiale schématique partielle illustrant le principe du montage d'un bloc optique sur une couronne d'entraînement grâce à un tirant passant au travers d'un perçage traversant du bloc ;
La figure 9 est une représentation schématique similaire à celle de la figure 8, dans le cas du montage du bloc entre deux roues d'un mécanisme d'activation.

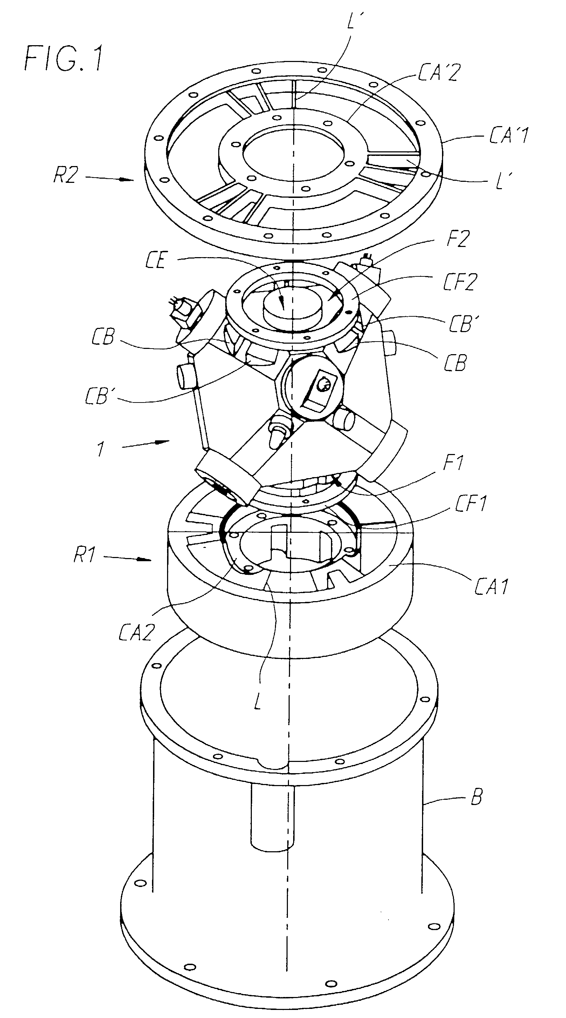

Le montage à deux roues polaires illustré sur la figure 1 fait intervenir, d'une part, une roue d'activation R₁ et, d'autre part, une roue d'équilibrage R₂.

Dans cet exemple, le mécanisme d'activation comprend tout d'abord une roue d'activation R₁ comprenant deux couronnes coaxiales CA₁, CA₂ reliées l'une à l'autre par une pluralité d'ailettes radiales L. Ces ailettes L comportent, de façon classique, un élément moteur et de détection piézo-électrique relié à un amplificateur de manière à provoquer un mouvement de rotation alternatif de l'une des couronnes CA₂ par rapport à l'autre CA₁.

La fixation du bloc optique 1 sur la couronne centrale CA₂ (couronne d'activation) du mécanisme d'activation s'effectue au moyen d'une couronne de fixation CF₁, sensiblement de même diamètre que la couronne d'activation CA₂ sur laquelle elle peut s'assembler coaxialement par vissage.

Cette couronne de fixation CF₁ qui est destinée à être disposée coaxialement à la cathode K, comprend trois couples de cales biseautées situés à 120° l'un de l'autre, et destinés à venir respectivement se coller sur les régions centrales des arêtes chanfreinées entourant la face F₁ du bloc.

La roue d'équilibrage R₂ comprend, quant à elle, deux couronnes coaxiales CA'₁, CA'₂ reliées l'une à l'autre par une pluralité d'ailettes radiales flexibles L'.

D'une façon analogue à la précédente, la fixation de la couronne CA'₂ sur le bloc optique 1 (à l'opposé de son plan équatorial relativement à la roue d'activation R₁) s'effectue au moyen d'une couronne de fixation CF₂ sensiblement de même diamètre que la couronne CF₁ et identique à la couronne CA'₂ sur laquelle elle peut s'assembler coaxialement à l'aide de vis.

Cette couronne de fixation CF₂ comprend trois couples de cales biseautées CB, CB' situées à 120° l'une de l'autre et destinées à venir respectivement se coller sur les régions centrales des arêtes chanfreinées entourant la face F₂.

L'ensemble comprenant le bloc optique 1 et les deux roues R₁, R₂ est logé dans un boîtier gyrométrique B dont la forme intérieure cylindrique est sensiblement au diamètre extérieur des couronnes. Des moyens de fixation sont prévus pour assurer le maintien des couronnes CA₁, CA'₁ sur le boîtier B en assurant à la fois une solidarisation mécanique des deux couronnes et une liaison thermique.

Conformément à l'invention, les couronnes de fixation CF₁, CF₂ sont spécialement conçues de manière à pouvoir transmettre avec une grande raideur les couples engendrés par ou sur les roues d'activation CA₂, CA'₂, et à pouvoir s'adapter et à compenser les écarts dimensionnels qui se manifestent entre le bloc 1 et les couronnes de fixation CF₁, CF₂, dus à des phénomènes de dilatation.

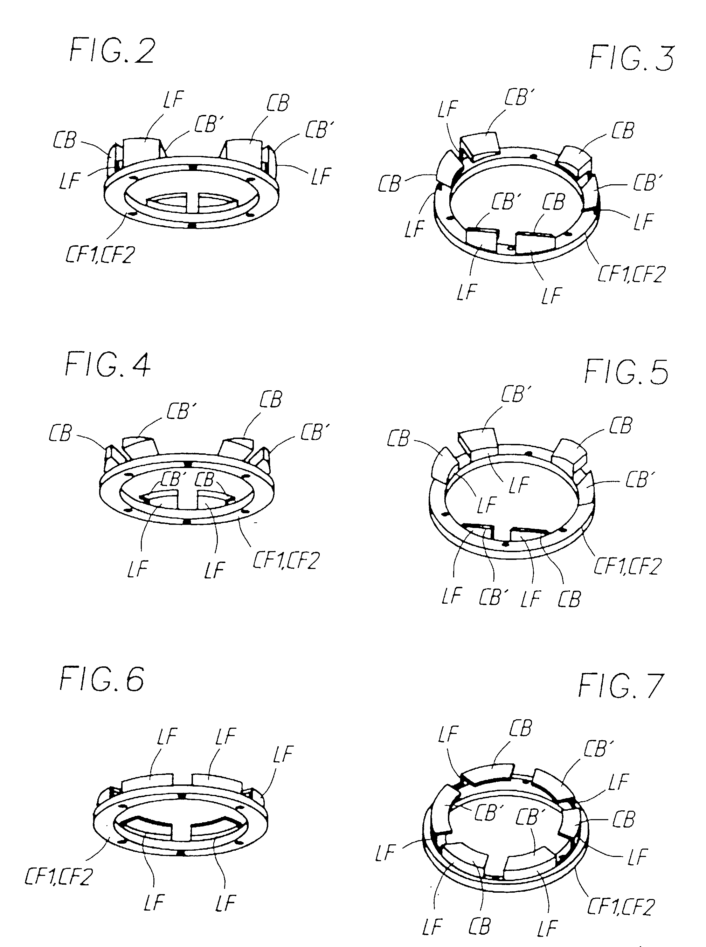

Ainsi, dans l'exemple illustré sur les figures 2 et 3, les cales de fixation CB, CB' sont reliées à la couronne de fixation par des languettes flexibles LF en forme de secteur cylindrique qui s'étendent coaxialement à la couronne CF₁, CF₂ à partir du bord extérieur de celle-ci. En fait, chaque cale CB, CB' constitue, avec sa languette LF, une seule et même pièce de section axiale sensiblement en forme de L avec la branche horizontale du L venant en retour vers le centre de la couronne CF₁, CF₂, Bien entendu, la face de fixation des cales CB, CB' présente une orientation (oblicité) appropriée pour pouvoir venir s'appliquer sans contrainte et se fixer par collage sur une facette correspondante du bloc optique 1.

Dans ce cas, outre le fait qu'on obtient une transmission positive efficace des couples blocs/roues R₁, R₂ en minimisant les efforts de cisaillement au niveau des collages (essentiellement des contraintes en traction/compression), on obtient une compensation avec autocentrage du bloc 1, lorsqu'il se produit des phénomènes de dilatation notamment au niveau des roues d'activation R₁, R₂.

Dans l'exemple représenté sur les figures 4 et 5, les cales de fixation CB, CB' (qui présentent une forme et une disposition similaires à celles précédemment décrites en regard des figures 2 et 3) sont reliées à la couronne de fixation CF₁, CF₂ par des languettes flexibles LF en forme de secteurs circulaires coaxiaux qui s'étendent axialement à partir du bord intérieur de la couronne CF₁, CF₂. L'ensemble cale CB, CB'/languette LF présente une section sensiblement en forme de L dans laquelle la branche horizontale s'étend vers l'extérieur de la couronne CF₁, CF₂.

Bien entendu, l'invention ne se limite pas aux deux modes d'exécution précédemment décrits.

En effet, les couronnes de fixation CF₁, CF₂ pourraient être fixées sur une même face de fixation du bloc 1 perpendiculaire à son axe d'activation.

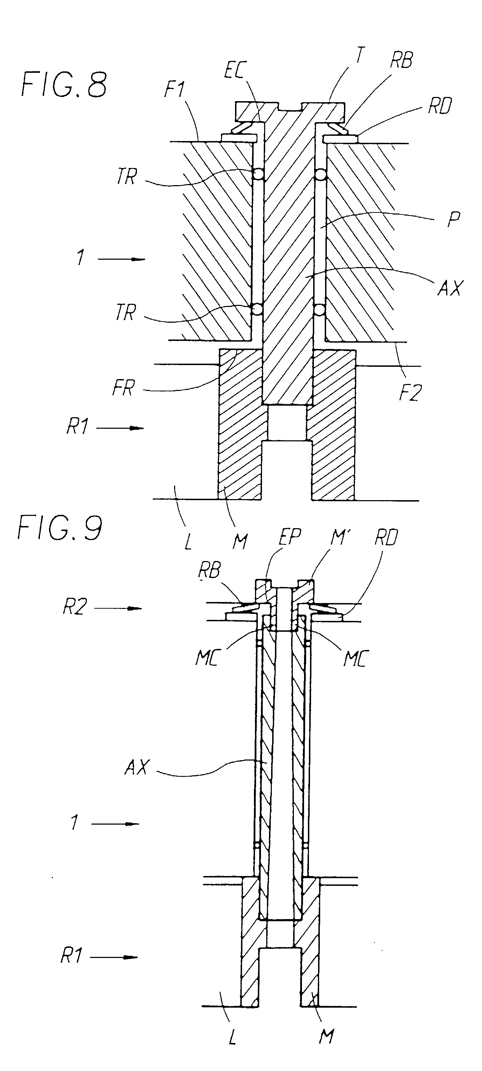

Dans ce cas, les cales de fixation CB, CB' pourraient s'étendre parallèlement au plan de la couronne CF₁, CF₂ comme représenté sur les figures 6 et 7. Dans ce cas, ces cales CB, CB' forment avec les languettes flexibles LF des structures en L reliées à la couronne au niveau de son bord extérieur et dont les branches horizontales viennent en retour vers le centre de la couronne CF₁, CF₂. Il est clair que dans ce cas, les zones de collage qui seront soumises à des contraintes en cisaillement, devront, pour pouvoir résister, présenter des surfaces plus importantes.

Dans les exemples représentés sur les figures 8 et 9, la fixation du bloc optique 1 sur le mécanisme d'activation s'effectue par pincement, par l'intermédiaire d'un axe AX passant au travers d'un perçage traversant P réalisé dans le bloc 1.

Ce mode de fixation s'applique aussi bien à des gyromètres monoaxe pouvant présenter des formes aplaties, qu'à des gyromètres triaxe présentant des formes compactes multiédriques se rapprochant de la forme d'une sphère.

Dans ces exemples, seul le moyeu M de la roue d'activation R₁ avec le départ des ailettes L a été représenté : ce moyeu M présente une section axiale en forme de H, avec un passage central réalisé dans la branche transversale du H.

De même, le bloc optique a été représenté partiellement. Il est limité par deux faces parallèles opposées F₁, F₂, le reste du bloc 1 pouvant présenter une forme quelconque.

Dans l'exemple représenté figure 8, l'axe comprend une extrémité qui s'engage et vient se fixer dans la cavité cylindrique du moyeu M, tandis que son autre extrémité est munie d'une tête T dont la base forme un épaulement circulaire radial EC.

La longueur de l'axe AX entre l'épaulement EC et la face radiale FR du moyeu M, sur laquelle s'appuie le bloc 1, est légèrement supérieure à la longueur du perçage P.

La fixation par pincement du bloc 1 sur la face FR du moyeu M est alors assurée grâce à des moyens élastiques précontraints disposés entre l'épaulement EC de la tête T et la face du bloc 1 située du côté de ladite tête.

Dans cet exemple, les moyens élastiques consistent en une rondelle Belleville RB prenant appui sur une rondelle RD retenue par la face F₁ du bloc 1.

Avantageusement, le centrage de l'axe AX dans le perçage P sera assuré par des joints toriques TR.

Selon le besoin, l'axe AX pourra être thermiquement isolé du bloc 1 ou, au contraire, en contact thermique avec celui-ci, par exemple par l'intermédiaire d'un gel thermiquement bon conducteur.

Dans l'exemple représenté sur la figure 9, l'axe AX est constitué par un tube en un matériau à faible coefficient de dilatation tel que, par exemple, en "invar".

Ce tube qui passe au travers du perçage du bloc vient s'engager et se fixer :
- à l'une de ses extrémités dans la cavité du moyeu d'une roue d'activation R₁ d'un mécanisme d'activation d'une façon similaire à la précédente, et
- à son autre extrémité, sur un manchon cylindrique MC solidaire du moyeu central M' d'une roue d'équilibrage R₂ faisant partie du mécanisme d'activation.

Le moyeu M' de la roue d'équilibrage R₂ joue le même rôle que la tête T de l'axe AX précédemment décrite.

D'une façon analogue, la solidarisation par pincement est obtenue grâce à une rondelle Belleville RB disposée entre un épaulement EP du moyeu M' et une rondelle d'appui RD portant sur le bloc 1.

Dans ces deux exemples, le pincement est maîtrisé par la détermination des dimensions des différentes pièces (moyeu des roues M, M', tête T, axe AX, rondelle d'appui RD, rondelle Belleville RB). L'écrasement (précontrainte) de la rondelle Belleville RB permet d'assurer une solidarisation par pincement du bloc 1 en dépit de variations dimensionnelles de l'axe d'entraînement AX dues à des phénomènes de dilatation.

Le calcul de la rondelle Belleville RB est effectué à partir des critères suivants :
- pression minimale pour garantir l'entraînement d'activation,
- variation de la longueur des différentes pièces en température,
- variation d'écrasement de la rondelle RB sous l'effet d'accélération ou chocs vus par le bloc optique 1.

Les modes d'exécution décrits sur les figures 8 et 9 constituent des solutions simples, très rapides à mettre en place et, par conséquent, peu coûteuses. Ils présentent en outre l'avantage :
- d'éviter l'utilisation de liaisons par collage,
- de permettre une bonne maîtrise des efforts appliqués sur le bloc optique 1, aussi bien en amplitude (pression déterminée par la précontrainte de la rondelle Belleville RB), qu'en orientation (trisectrice du bloc 1 dans le cas d'un gyromètre triaxe ou axe du gyromètre dans le cas d'un gyromètre monoaxe),
- d'assurer un centrage et un positionnement précis de l'axe AX par rapport au gyromètre (grâce aux joints toriques),
   de minimiser les contraintes exercées sur les faces d'appui F₁, F₂ du bloc 1 en raison de phénomènes de dilatation. (L'axe AX pourra être réalisé en un matériau à faible coefficient de dilatation),
- de permettre un choix plus large de matériaux entrant dans la réalisation du gyromètre du fait que les contraintes sont concentrées au niveau de l'axe métallique AX. (Ainsi les roues d'activation R₁, R₂ pourront être réalisées en acier),
- d'autoriser des environnements thermiques plus sévères en raison de l'absence de collage direct entre une roue d'activation R₁, R₂ en métal et un bloc optique 1 en un matériau tel que le zérodur.

## Revendications

1. Dispositif de fixation d'un bloc optique de gyromètre laser sur la couronne d'activation (CA₂) d'un mécanisme d'activation, caractérisé en ce qu'il comprend des moyens de transmission (LF) au bloc (1) du couple de rotation engendré par le mécanisme d'activation (R₁) ainsi que des moyens de compensation des écarts dimensionnels se produisant entre le bloc (1) et ladite couronne (CA₂).

2. Dispositif selon la revendication 1, caractérisé en ce qu'il comprend une couronne de fixation (CF₁) solidaire de la susdite couronne d'activation (CA₂) et portant une pluralité de cales de fixation (CB, CB') uniformément réparties et reliées à ladite couronne de fixation (CF₁) par une languette axiale flexible (LF), lesdites cales (CB, CB') étant destinées à être fixées par collage sur au moins une face du bloc optique (1).

3. Dispositif selon la revendication 2, caractérisé en ce que la susdite languette flexible (LF) présente la forme d'un secteur cylindrique.

4. Dispositif selon l'une des revendications précédentes, selon lequel le bloc optique (1) présente une forme octaédrique et l'axe d'activation passe au centre de deux faces triangulaires parallèles et opposées (F₁, F₂) de ce bloc (1), ces deux faces (F₁, F₂) étant bordées par des arêtes chanfreinées, caractérisé en ce que la couronne de fixation (F₁) comprend trois couples de cales (CB, CB') situés à 120° l'un de l'autre et destinés à venir se coller sur les régions centrales des susdites arêtes chanfreinées.

5. Dispositif selon l'une des revendications 3 et 4, caractérisé en ce que chaque cale (CB, CB') constitue avec sa languette (LF) une pièce de section axiale en forme de L.

6. Dispositif selon la revendication 5, caractérisé en ce que la languette (LF) est solidaire du bord extérieur de la couronne de fixation (CF₁, CF₂) et en ce que la cale (CB, CB') vient en retour vers le centre de ladite couronne (CF₁, CF₂).

7. Dispositif selon l'une des revendications 1 à 5, caractérisé en ce que la languette (LF) est solidaire du bord intérieur de la couronne de fixation (CF₁, CF₂) et en ce que la cale (CB, CB') s'étend vers l'extérieur de ladite couronne (CF₁, CF₂).

8. Dispositif selon l'une des revendications précédentes, caractérisé en ce que les susdites cales (CB, CB') présentent une oblicité appropriée pour permettre leur collage sans contrainte sur une facette du bloc (1).

9. Dispositif selon l'une des revendications 1 à 7, caractérisé en ce que les faces de fixation des susdites cales (CB, CB') s'étendent dans un plan perpendiculaire à l'axe d'activation et sont destinées à être collées sur une même face (F₁, F₂) du bloc (1).

10. Dispositif selon la revendication 1, caractérisé en ce qu'il fait intervenir un perçage traversant (P) réalisé dans le bloc (1) coaxialement à l'axe d'activation, entre deux faces parallèles opposées (F₁, F₂) dudit bloc (1) ainsi qu'un tirant (AX) à tête (T) passant à travers ledit perçage (P) pour se fixer sur ladite couronne (FR), ladite tête (T) prenant appui sur le bloc (1) par l'intermédiaire d'un moyen élastique précontraint (RB) de manière à exercer une force d'application entre ladite couronne (FR) et ledit bloc (1).

11. Dispositif selon la revendication 10, caractérisé en ce que la susdite tête (T) consiste en le moyeu (M') d'une roue d'équilibrage.
